(19)

Europäisches
Patentamt
European
Patent Office
Office européen
des brevets

(11) **EP 2 336 971 A2**

(12) **EUROPEAN PATENT APPLICATION**

(43) Date of publication:
22.06.2011 Bulletin 2011/25

(51) Int Cl.:
*G06T 7/00* (2006.01)   *G06F 9/44* (2006.01)
*G06K 9/62* (2006.01)

(21) Application number: 10005778.5

(22) Date of filing: 02.06.2010

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(30) Priority: **09.11.2009 EP 09014014**

(71) Applicant: **SIEMENS AKTIENGESELLSCHAFT**
**80333 München (DE)**

(72) Inventors:
• **Estermann, Colin**
**82166 Gräfelfing (DE)**
• **Hutter, Andreas**
**81673 München (DE)**

(54) **Method and system for optimization of a computer vision algorithm**

(57)     The invention refers to a method for optimization of computer vision regarding the resources of a given computing system. A computer vision algorithm is provided. The computer vision algorithm is modified or parametrized with different combinations of speed and quality enhancement techniques, each of them effecting a different behaviour of the algorithm with regard to an improvement of its speed at the cost of quality or to an improvement of its quality at the cost of speed, thereby controlling each of the enhancement techniques with a parameter having a set of possible states. A subset of parameter state combinations is determined by evaluating the relationship of quality and speed of all or a subspace of possible parameter state combinations, wherein each parameter state combination of the subset comprises a respective parameter for each enhancement technique and wherein each parameter state combination of the subset represents a relation between speed and quality of the algorithm. The subset of parameter state combinations is used as a basis for a scaling directive within a control loop to set or adapt the parameters of the algorithm in dependence of the resources of the given computing system and/or additional constraints.

FIG 11

**Description**

The invention relates to a method for and a system for optimization of a computer vision algorithm regarding the resources of a given computing system.

As an example for a computer vision algorithm, stereo vision enables a system to percept all three spatial dimensions, and thereby is predestined for its use in the context of spatial orientation and navigation. There is a special interest for the application of the underlying algorithms on mobile devices, such as autonomous self orienting systems or systems assisting a user in an unknown environment, or on embedded devices. Typically, the restricted hardware of mobile and embedded devices can hardly satisfy the demand of stereo correspondence for high computing power. Moreover, computer vision algorithms usually are not performed for its own sake, but represents one of various modules working together in a vision framework aiming for a certain functionality and sharing the processing resources of the same computing system.

For real-time applications, in particular when running on mobile devices or embedded systems, the computational power is a critical resource that has to be shared among multiple competing processes. For each process, the actual demand for computational resources may be fluctuating significantly over time. When the sum of all required computational resources is higher than the actual available computation resource on the system, then the real-time constraints of the applications are violated and the execution of some applications may no longer be possible. In this context, a required computational resource means that the resources are demanded by the processes. When a sum of all required computational resources is lower than the actual available computation resource on the system then the computational resource on the system is wasted.

Since the computational resources on each system are different, an algorithm has to be adapted for each of the different systems. The same problem arises when an algorithm is to be ported on a new platform. Optimization has to be made for the target computational requirements. Typically, this optimization has to be done manually. This is time-consuming and inefficient.

It is therefore an objective of the present invention to provide an improved method which enables a computer-based real-time optimization of a computer vision algorithm like stereo correspondence regarding the resources of a given computing system. A further objective of the present invention is to provide a method that improves portability to different computing systems. It is a further objective of the present invention to provide an improved system for optimization of a stereo correspondence algorithm.

These and other objectives are solved by a method according to claim 1 and a system according to claim 12. Preferred embodiments are set out in the dependent claims.

The invention provides a method for optimization of computer vision algorithms like stereo correspondence regarding the resources of a given computing system. The method comprises the steps of a) providing a computer vision algorithm like stereo correspondence; b) modifying or parameterizing the computer vision algorithm with different combinations of speed and quality enhancement techniques, each of them effecting a different behaviour of the algorithm with regard to an improvement of its speed at the cost of quality or to an improvement of its quality at the cost of speed, thereby controlling each of the enhancement techniques with a parameter having a set of possible states; c) determining a subset of parameter state combinations by evaluating or estimating the relationship of quality and speed of all possible parameter state combinations or a carefully determined subspace thereof, wherein each parameter state combination of the subset comprises a respective parameter for each enhancement technique and wherein each parameter state combination of the subset represents a relation between speed and quality of the algorithm; and d) using the subset of parameter state combinations as a scaling directive within a control loop to adapt the computing time of the algorithm in dependence of the resources of the given computing system and potentially additional constraints.

The method enables an automatic self-adaption of the computer vision algorithm to the available resources of the given computing system. Hence, the algorithm can be used on platforms with limited resources, like mobile devices or embedded systems.

According to a preferred embodiment, a stereo correspondence algorithm with a block-based local error minimization is used.

According to a further embodiment, a number of different implementations of the stereo correspondence algorithm is modified with the different speed and quality enhancement techniques. It is advantageous if the number of implementations is equivalent to each other with respect to their result quality, but not to their computing speed. The number of implementations of the stereo correspondence algorithm may comprise

- a directly implemented error minimization in a disparity space,
- a moving average filter-based implementation, and
- a block matching algorithm.

According to a further preferred embodiment, the step of adapting the computing time of the algorithm comprises the steps of d1) determining the computing time of the algorithm for a previous single frame with its last parameter state combination; d2) determining the computing time of all other processes running on the computing during the computation of the previous frame; d3) determining a predicted computing time of the algorithm for the current frame from the computing times of steps d1) and d2); and d4) retrieving a parameter state combination of the subset of parameter state combinations according to the predicted computing time of step d3) for adapting the computing time of the algorithm.

The step of retrieving a parameter state combination of the subset of parameter state combinations may be carried out such that the quality of the algorithm is optimized with regard to the determined predicted computing time. I.e., if there are different solutions with the same computing time, the solution with the best quality of the algorithm is chosen. According to a further preferred embodiment, the predicted computing time or the estimated computing time associated with a parameter state combination is adjusted with a correction factor. As an advantage of this embodiment, a security margin with regard to the computational resources is provided. This is because the predicted computing time is based on information of a previous single frame. Between the previous frame and the current frame the computing time of other processes might change. With the correction factor this change can be considered.

According to a further preferred embodiment, the step of determining a subset of parameter state combinations comprises for all or a representative set of possible combinations of selected parameters the steps of c1) conducting tests using test data for a certain application domain; c2) recording a joint set of accuracy and computational requirements of the computing system for receiving a statistical information about quality, i.e. an error rate of the algorithm, and computing speed; c3) eliminating all inefficient parameter state combinations of parameters by an optimization algorithm, especially a Pareto-optimization; and c4) storing the resulting parameter state combinations as the subset of parameter state combinations.

In a further preferred embodiment, if the parameters of the enhancement techniques are deemed to be statistically independent from each other, then it is possible to reduce the number of required tests by only varying each parameter individually and then estimating the results for the remaining combinations..

According to a further preferred embodiment the method of the invention is conducted in real time.

The invention further provides a system for optimization of a computer vision algorithm like stereo correspondence regarding the resources of a given computing system. The system comprises a) a first means for modifying or parametrizing the computer vision algorithm with different speed and quality enhancement techniques, each of them effecting a different behaviour of the algorithm with regard to an improvement of its speed and the cost of quality or to an improvement of its quality at the cost of speed, thereby controlling each of the enhancement techniques with a parameter having a set of possible states; b) a second means for determining a subset of parameter state combinations by evaluating or estimating the relationship of quality and speed of all possible or a defined subspace of parameter state combinations, wherein each parameter state combination of the subset comprises for each enhancement technique a respective parameter and wherein parameter state combination represents a relation between speed and quality of the algorithm; and c) a third means for using the subset of parameter state combinations as a basis for a scaling directive within a control loop set or to adapt the computing time of the algorithm in dependence of the resources of the given computing system and/or additional constraints.

By means of the invention a model can be derived for a real-time adaption of a required computational resource of a stereo correspondence algorithm while still achieving best possible accuracy. This is realized by optimum parameter combinations together with their respective set of computational resource and accuracy data. Using this information during run-time of the algorithm for adapting the parameter sets in real-time allows the adaption of the required computational resource.

The invention will be described in more detail by reference to the figures.

Fig. 1          shows a matrix of pixels of an image il- lustrating that the combination of dif- ferent block sizes with the same sampling period can result in same samples.

Fig. 2          shows examples for search images, ground truths, and reference images for tests which are used for an evaluation of error expectation values.

Fig. 3a to 3g   shows various diagrams illustrating error expectation values and computing times for different states of parameters of various speed and quality enhancement techniques for the stereo correspondence algorithm used in the invention.

Fig. 4a to 4g   shows various diagrams of uncoupled error expectation values for single parameters calculated from values in Fig. 3.

Fig. 5a, 5b     shows error correction probabilities for error correction scaling parameters peak ratio p and luminance correction c which are calculated from the related error probabilities in Fig. 4.

| Fig. 6 | shows minimum values and maximum values of relative errors versus different state combinations. |
|---|---|
| Fig. 7a to 7g | shows various diagrams illustrating com- puting-time factors for single parameters of the enhancement techniques in Fig. 3. |
| Fig. 8 | shows a diagram illustrating relative er- rors over different parameter combina- tions. |
| Fig. 9 | shows a time-error-diagram of a scaling model used in the method according to the invention. |
| Fig. 10 | shows error probabilities, relative com- puting times and single parameter values for the states of the scaling model in Fig. 9. |
| Fig. 11 | shows an exemplary embodiment of the sys- tem according to the invention. |
| Fig. 12 | shows a comparison of the behaviour of a stereo correspondence according to the prior art and the stereo correspondence algorithm according to the invention. |

The invention proposes an algorithmic approach by making a stereo correspondence algorithm scalable so that on a system with given, i.e. predefined, resources the computing effort can be reduced on cost of quality or quality can be improved on cost of computing speed. Thus the optimal exploitation of the computing-power available always can be ensured, enabling an automatic system porting, as well as a dynamic adaption of the algorithm to computing-time slots of variable length.

The procedure aiming for a scalable algorithm can be split into 3 steps:

1. Algorithm Selection: A basic algorithm, providing an optimal trade-off between speed and effort and furthermore allowing for acceleration as well as error reduction techniques, will be used as a stereo correspondence algorithm.

2. Parametrization: Techniques for accelerating the basic algorithm on cost of quality or enhancing its quality on cost of computing time are applied, each contributing a parameter that can be used for scaling the algorithm.

3. Modelling: From a statistic error evaluation and measurement of the corresponding computing times the efficiencies for all combinations of parameter states can be put in relation to each other. This allows for an optimization resulting in a set of all efficient combinations of parameter states. Since this set gives information about the parameter states needed for a certain computing effort, it can be used as a scaling directive.

Stereo Correspondence of a reference image and a search image is a classic problem in computer science. The so-called block based local error minimization in disparity space which is known from prior art turns out to be an efficient approach for the given problem. Furthermore, the use of the Sum of Absolute Differences (SAD) as an error measure is seen to be feasible, which also is known from prior art.

The algorithm is represented by 3 computing steps (cost computation, cost aggregation, and cost minimization): In the cost computation step a disparity space D(x,y,d) is built by shifting the search image $f_s$ (x,y) against the reference image $f_r$ (x, y) :

$$D_{f_r,f_s}(x_r, y_r, d) =$$
$$|f_r(x_r, y_r) - f_s(x_r + d\frac{s_x}{|s|}, y_r + d\frac{s_y}{|s|})| \qquad (1)$$

A baseline vector is $s=(s_x, 0)$ for real stereo images and must be additionally estimated in case of a structure from motion computation from single camera views.

In the following cost aggregation step for a pixel at the position $(x_r, y_r)$ in the reference image the cost (SAD) for a shift by d is calculated from a block with the size kxk:

$$SAD\left(D_{f_r,f_s}(x_r, y_r, d)\right) =$$

$$\sum_{i=-\frac{k-1}{2}}^{\frac{k-1}{2}} \sum_{j=-\frac{k-1}{2}}^{\frac{k-1}{2}} D_{f_r,f_s}(x_r + i, y_r + j, d) \qquad (2)$$

In the cost minimization step, finally, the disparity estimate d(x_r, y_r) is calculated from error minimization:

$$d_{f_r,f_s}(x_r, y_r) = \arg \min_{d'} SAD(D_{f_r,f_s}(x_r, y_r, d')) \qquad (3)$$

This procedure is performed for all pixels in the reference image, so that:

$$x_r, y_r \in \left\{ \frac{k-1}{2}, \frac{k-1}{2} + 1, \frac{k-1}{2} + 2, \ldots \right\} \qquad (4)$$

For a horizontal search direction with the baseline vector $s(s_x, 0)$ the search area is restricted to the values:

$$d' \in \{-d'_{max}, \ldots, -1, 0, 1, \ldots, d'_{max}\} \qquad (5)$$

For baseline vectors with both components $s_x$, $s_y \neq 0$, as they occur for structure from motion, the component of the dominant direction is considered and the second component is calculated from the vector slope.

For an efficient implementation the cost aggregation step may be realized as a moving average filter which is known from prior art. For each line y=y' in a plane d=d' in disparity space first the mostleft sum $\sigma_0$ corresponding to the block size k is calculated:

$$\sigma_0 = \sum_{x=0}^{k-1} D(x, y', d') \qquad (6)$$

For each following step the mostleft value included in the sum is subtracted from it, and the value next to the right of the included values is added:

$$\sigma_i = \sigma_{i-1} - D(i-1, y', d') + D(i-1+k, y', d') \qquad (7)$$

The columns of the resulting σ then are processed in the same way.

The disparity space can be seen as a direct derivate of the block matching algorithm with a linear search area, producing identical results. Here two pixels are compared by the surrounding blocks directly in the two images:

$$d_{f_r,f_s}(x_r,y_r) = \arg\min_{d'} \sum_{i=-\frac{k-1}{2}}^{\frac{k-1}{2}} \sum_{j=-\frac{k-1}{2}}^{\frac{k-1}{2}} \left| f_r(x_r+i, y_r+j) \right.$$
$$\left. - f_s\left(x_r+i+d'\frac{s_x}{|\mathbf{s}|}, y_r+j+d'\frac{s_y}{|\mathbf{s}|}\right) \right|. \tag{8}$$

Parametrization

Basic Algorithm

In the previous section the concept of block based error minimization for pixel correspondence was described. Three implementations that are equivalent concerning their result quality but not concerning their computing speed have been outlined:

- DSd: Directly implemented error minimization via disparity space (cp. equations 1, 2, and 3)

- DSma: Error minimization via disparity space with a moving average implementation of the cost aggregation step (cp. equations 6 and 7)

- BM: The classic block matching algorithm (cp. equation 8).

A set A of possible states for the scaling parameter a is:

$$a \in A = \{BM, DSd, DSma\} \tag{9}$$

Below additionally different methods for speed or quality enhancement are introduced, each one contributing one parameter representing the respective functionality. The collection of techniques makes no claim to be complete but covers the most basic techniques while ignoring obviously inefficient methods.

Block Size

The block size k is a well known value for quality optimization in block based stereo correspondence. Very small blocks are known to result in a bad quality due to low pixel distinguishability and very huge blocks are known to result in a bad quality due to coarseness, so that an optimum $k_{opt}$ can be found. The computing speed is independent from k for DSma, but not for DSd and BM, where higher block sizes result in higher computing times. Due to the decreasing quality and increasing effort for $k>k_{opt}$, those inefficient values for scaling are ignored. The set K of possible states for the scaling parameter k is:

$$k \in K = \{1, 3, 5, \ldots, k_{opt}\} \tag{10}$$

Block Spacing

Where disparity usually is calculated for each image pixel, block matching for image and video coding purposes utilizes disjoint adjacent blocks that are produced by subdividing the reference image into a grid. Both cases can be regarded as two extrema of the distance between the pixels of interest so that with the block spacing b equation 4 changes to:

$$x_r, y_r \in \{\frac{k}{2}, \frac{k}{2} + b, \frac{k}{2} + 2b, \ldots\}$$

(11)

A small block spacing implies many calculations producing a high resolution of disparity estimates and with that a high result quality. Huge block spacings on the other hand imply a reduction of the computation cost at the expense of a lower resolution of disparity estimates and a lower result quality.
With this, the set B of possible states for the block spacing b is:

$$b \in B = \{1, 2, 3, \ldots, k\}$$

(12)

Sampling Period

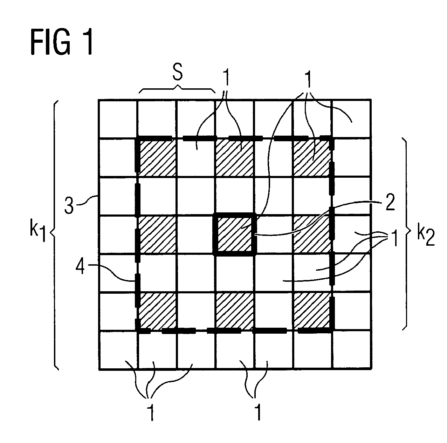

Although the technique of sub-sampling is a widely used acceleration concept in computer science, it is usually not used for stereo correspondence.
Referring to Fig. 1, since a block 3, 4 of pixels 1 is seen as the local environment of a pixel 2 of interest, there should always be a sample in the block center 2. For different combinations of block sizes $k_1$, $k_2$ (in general k) and sampling periods s identical cases may occur (Fig. 1). From that an effective block size $k_{eff}$ can be derived:

$$k_{eff} = 2 \left\lfloor \frac{\frac{k-1}{2}}{s} \right\rfloor s + 1$$

(13)

For uncoupling both parameters only values of s are used so that $k = k_{eff}$ :

$$S = \left\{ s \in \mathbb{N}^+ \middle| \frac{\frac{k-1}{2}}{s} \in \mathbb{N}^+ \right\}$$

(14)

Sub-sampling can be implemented easily for BM, it is different in disparity space, especially in combination with varied block spacings: Since the pixel of interest must be a sample, sub-sampling during the cost computation step reduces the set of possible block spacings in the cost aggregation step to multiples of the sampling period. Due to this grave reduction of the parameter set, for DSd the subsampling is only used in the cost aggregation step after a full calculation of the disparity space. For DSma it is not used at all, since a moving average filter is not compatible with subsampling.

Logarithmic Search

The logarithmic search is a tool often used for acceleration of the full search block matching. In a first logarithmic step the search vector $\mathbf{d'}\dfrac{\mathbf{s}}{|\mathbf{s}|}$ in equation 8 is sub-sampled by $2^{m_0}$ so that for a horizontal search direction $\dfrac{\mathbf{s}}{|\mathbf{s}|}=(1,0)$ equation 5 changes to:

$$d' \in \left\{ -d'_{max}, \ldots, -2^{m_0}, 0, 2^{m_0}, \ldots, d'_{max} \right\} \qquad (15)$$

The error minimum do of the first step is calculated according to equation 8.

In the following logarithmic step, the search vector is sub-sampled by $2^{m_0-1}=2^{m_1}$ between the minimum of the previous step and its neighbouring samples, so that equation 5 changes to:

$$d' \in \left\{ d_0 - 2^{m_0} + 2^{m_1}, \\ \ldots, d_0 - 2^{m_1}, \quad d_0, \quad d_0 + 2^{m_1}, \ldots \\ , \quad d_0 + 2^{m_0} - 2^{m_1} \right\} \qquad (16)$$

This procedure is repeated iteratively with $m_{i+1}=m_i-1$ until in the final step there is no more subsampling with $m_{final}=0$. From the overall number 1 of logarithmic steps the sampling period of the search vector for the first step can be calculated:

$$2^{m_0} = 2^{l-1} \qquad (17)$$

The set L of possible states for the number 1 of steps in a logarithmic search corresponding with the initial subsampling periods $2^m \in \{1,2,4,8\}$ is:

$$l \in L = \{1, 2, 3, 4\} \qquad (18)$$

A logarithmic search must be performed separately for each regarded pixel position, since the sampled search positions depend on the individual error minimum. So in disparity space the cost aggregations will be performed in different d-layers for different pixel positions, resulting in sparsely sampled d-layers. The benefit of a moving average filter on the other hand is the avoidance of redundant calculations for a fully sampled d-layer, so that both concepts can not be combined and the parameter 1 is not applied for a=DSma.

Computing Region

Since the algorithm is used for spatial orientation, the presence of camera movement can be assumed, and even is required for generating disparity in the single camera case. Hence the computing effort can be decreased easily by reducing the region of calculation for each video frame and completing the not computed pixels by passing down the results of previous frames. Therefore, the use of a lamellar region orthogonal to the direction of the camera movement is advantageous. For a purely horizontal right-to-left camera movement then only values in a region of width r' at the image border to the left are computed, so that equation 4 here

$$x_r \in \{\frac{k}{2}, \frac{k}{2}+1, \frac{k}{2}+2, \ldots, \frac{k}{2}+r'\} \qquad (19)$$

$$y_r \in \{\frac{k}{2}, \frac{k}{2}+1, \frac{k}{2}+2, \ldots\}$$

For a left-to-right camera movement the computing region is shifted to the right hand image border and for up-down or down-up movements it is located at the bottom or top image border, respectively. For arbitrary camera movements only the dominant component of the movement vector is regarded. The missing values are, considering the camera movement vector, directly taken from the nearest previous frame where they are available, without any filtering.

In combination with a changed block spacing b, the computational effort depends on both parameters, so that the number r' of horizontal computations in equation 19 would change to $\left\lfloor \frac{r'}{b} \right\rfloor$ with a block spacing b. For uncoupling both parameters, here the percental amount r of disparity calculations in reduced direction is regarded, with the number $P_{complete}$ of computed pixels without a restricted computing area and the number $P_{restricted}$ of computed pixels with a restricted computing area:

$$r = 100 \left\lfloor \frac{P_{restricted}}{P_{complete}} \right\rfloor \qquad (20)$$

With that the set R of possible states for the computing area r is:

$$r \in R = \{0, 1, 2, \ldots, 100\} \qquad (21)$$

Peak Ratio

A technique for enhancing the result quality is the use of confidence measures. There is a broad variety of different approaches for the decision whether the result of a single disparity calculation is relyable or not, so that in the latter case it can be discarded and replaced by a neighbouring value. Due to its efficiency Peak Ratio is used for the calculation of block confidences. Here the computed similarity error (SAD) distribution over the search vector is regarded. The Peak Ratio is the relation between its first minimum SAD-$_{min1}$ and second minimum SAD$_{min2}$, so that the result of a disparity computation is decided:

$$\frac{SAD_{min1}}{SAD_{min2}} \begin{cases} \leq 0.8 \Rightarrow & \text{confident,} \\ > 0.8 \Rightarrow & \text{not confident} \end{cases} \qquad (22)$$

The factor 0.8 already is an optimized value and does not effect the computing speed since values first need to be calculated before the confidence decision. So the set P of possible states for the parameter p represents a yes/no-decision whether the peak ratio is applied (p=1) or not (p=0):

$$p \in P = \{0, 1\} \qquad (23)$$

In a following step, each discarded value is replaced by its smallest confident neighbour, aiming for a compensation of the foreground fattening effect.

Luminance Correction

Where for real stereo cameras both images always contain the identical scene, for a single, moved camera one image can contain areas not contained in the other image. If such an area is exceptionally bright, the brightness is adapted automatically by the camera for this whole image. The same effect occurs in case of temporal illumination fluctuations, causing both temporally shifted images to have different overall brightnesses. This problem was already solved in prior art for DSd and DSma by generating additional disparity spaces with a differently scaled search image:

$$D^{c'}_{f_r, f_s}(x_r, y_r, d) = \left| f_r(x_r, y_r) - \left( c' + f_s(x_r + d\frac{s_x}{|s|}, y_r + d\frac{s_y}{|s|}) \right) \right| \qquad (24),$$

with c'∈{-c,...,-1,0,1,...,c}.

The cost minimization step in equation 2 then is performed over all disparity spaces:

$$d_{f_r, f_s}(x_r, y_r) = \arg\min_{d'} \{ \quad SAD(D^{-c}_{f_r, f_s}(x_r, y_r, d')),$$

$$\vdots$$

$$SAD(D^{-1}_{f_r, f_s}(x_r, y_r, d')),$$
$$SAD(D_{f_r, f_s}(x_r, y_r, d')),$$
$$SAD(D^{+1}_{f_r, f_s}(x_r, y_r, d')),$$

$$\vdots$$

$$SAD(D^{+c}_{f_r, f_s}(x_r, y_r, d')) \quad \} \qquad (25)$$

With the same principle applied to BM, equation 8 is changed to:

$$d_{f_r,f_s}(x_r, y_r) =$$

$$\arg \min_{d'} \sum_{i=-\frac{k}{2}}^{\frac{k}{2}} \sum_{j=-\frac{k}{2}}^{\frac{k}{2}} \left| f_r(x_r + i, y_r + j) \right. \tag{26}$$

$$\left. - \left( c' + f_s\left(x_r + i + d'\frac{s_x}{|\mathbf{s}|}, y_r + j + d'\frac{s_y}{|\mathbf{s}|}\right) \right) \right| \tag{27},$$

with $c' \in \{-c,...,-1,0,1,...,c\}$.

The set C of possible states for the parameter c is:

$$c \in C = \{0, 1, 2, 3\} \tag{28}$$

With that the number of additionally calculated disparity spaces is 2c+1.

In the table below an overview of the above-mentioned scaling parameters with the respective sets of possible states is shown. The basic state is the particular parameter state representing the unscaled basic algorithm. The basic state of the basic algorithm is BM, since, unlike DSma, it can be combined with all other parameters.

| Parameter | Name | Set of states | Basic state |
|---|---|---|---|
| basic algorithm | $a \in$ | $A = \{BM, DSd, DSma\}$ | $a_0 = BM$ |
| block size | $k \in$ | $K = \{1, 3, 5, ... , k_{max}\}$ | $k_0 = k_{max}$ |
| block spacing | $b \in$ | $B = \{1, 2, 3, ... , k\}$ | $b_0 = 1$ |
| sampling period | $s \in$ | $S = \left\{ s \in \mathbb{N}^+ \middle| \frac{k-1}{2s} \in \mathbb{N}^+ \right\}$ | $s_0 = 1$ |
| logarithmic steps | $l \in$ | $L = \{1, 2, 3, 4\}$ | $l_0 = 1$ |
| computing region | $r \in$ | $R = \{1,2, 3,..., 100\}$ | $r_0 = 100$ |
| peak ratio | $p \in$ | $P = \{0,1\}$ | $p_0 = 0$ |
| luminance correction | $c \in$ | $C = \{0, 1, 2, 3\}$ | $c_0 = 0$ |

Modelling

Efficiency Evaluation

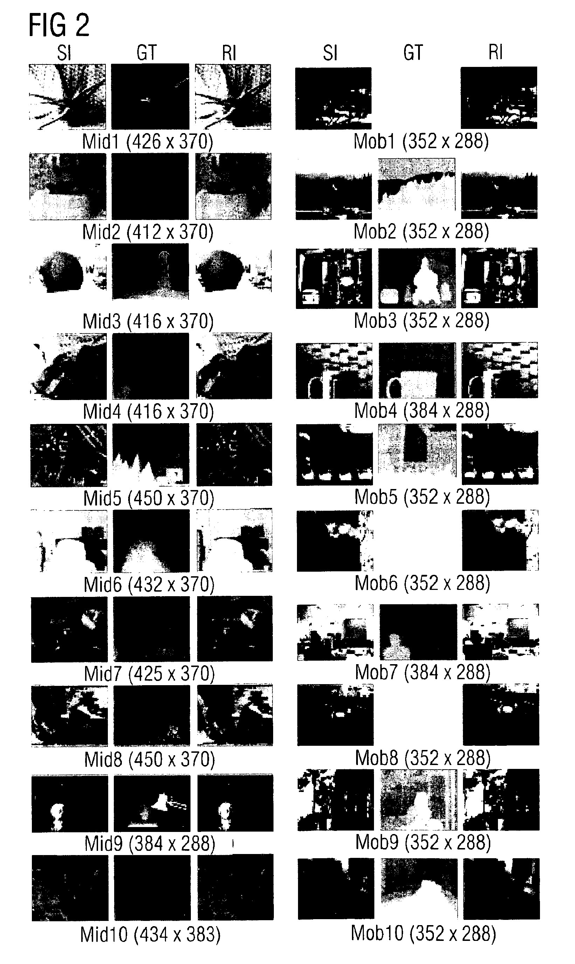

For an efficiency evaluation of the scaling parameters that are shown in the table above, from a high number of tests the error expectation value for a certain parameter combination is calculated. Therefore, the test sequences shown in Fig. 2 can be used.

Each image set comprises a search image SI, a ground truth GT and a reference image RI. Next to the name of the image set, the size of each image in pixel is denoted:

- "Middlebury" sequences: 10 geometrically complex "middlebury" test image sets Mid1, Mid2, ..., Mid10 which are known from prior art.

- "Mobile" sequences: 10 more realistic "mobile" video sequences which are recorded with a hand-held mobile device, lack any preprocessing such as image rectification or gaussfiltering, and contain scenes of less geometric complexity. The ground truths were constructed by hand. They are referenced with Mob1, Mob2, ..., Mob10.

A pixel disparity $d_{fr,fs}(x,y)$ is decided to be an error if it differs from the ground truth $\hat{d}_{fr,fs}(x,y)$ by more than "1" :

$$ e_{f_r,f_s}(x,y) = \begin{cases} 1, \text{ if } \left| \hat{d}_{f_r,f_s}(x,y) - d_{f_r,f_s}(x,y) \right| > 1 \\ 0, \text{ else.} \end{cases} \qquad (29) $$

The error expectation value $\hat{P}$ of a certain parameter combination then is calculated from all N pixels of the result images calculated for all 20 test sequences:

$$ \hat{P} = \frac{1}{N} \sum_N e_{f_r,f_s}(x,y) \qquad (30) $$

Single Parameter Testing Results

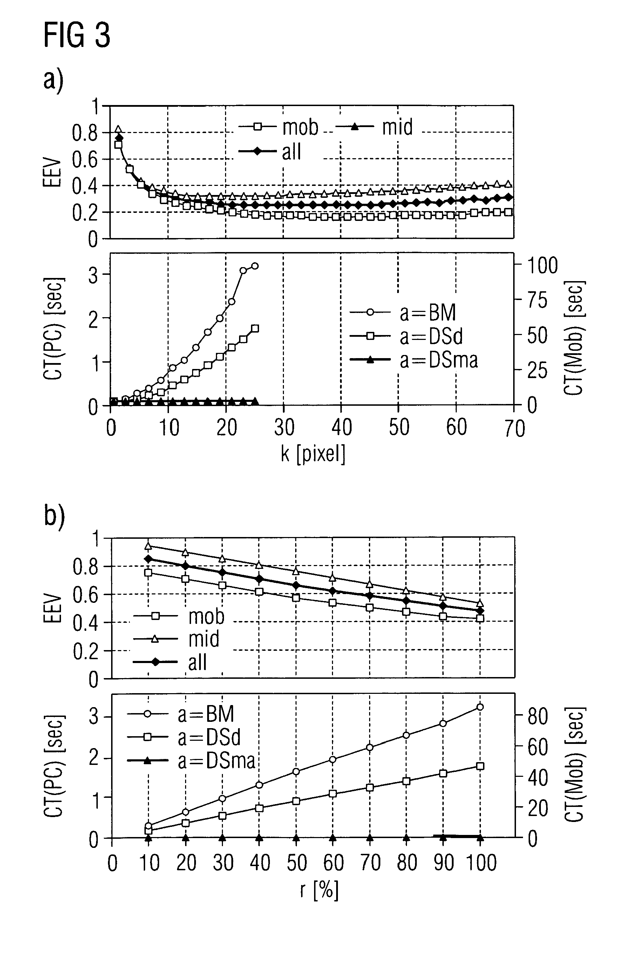

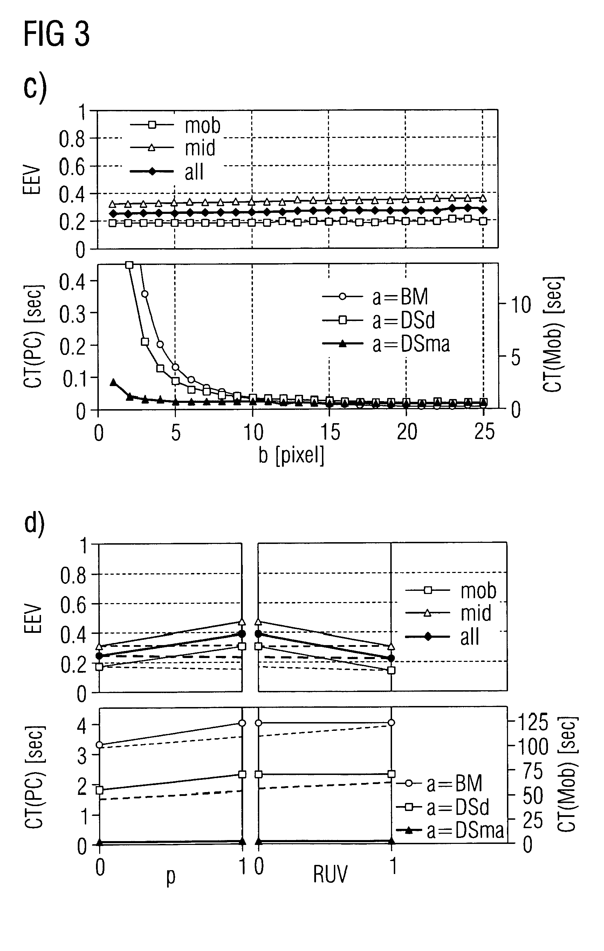

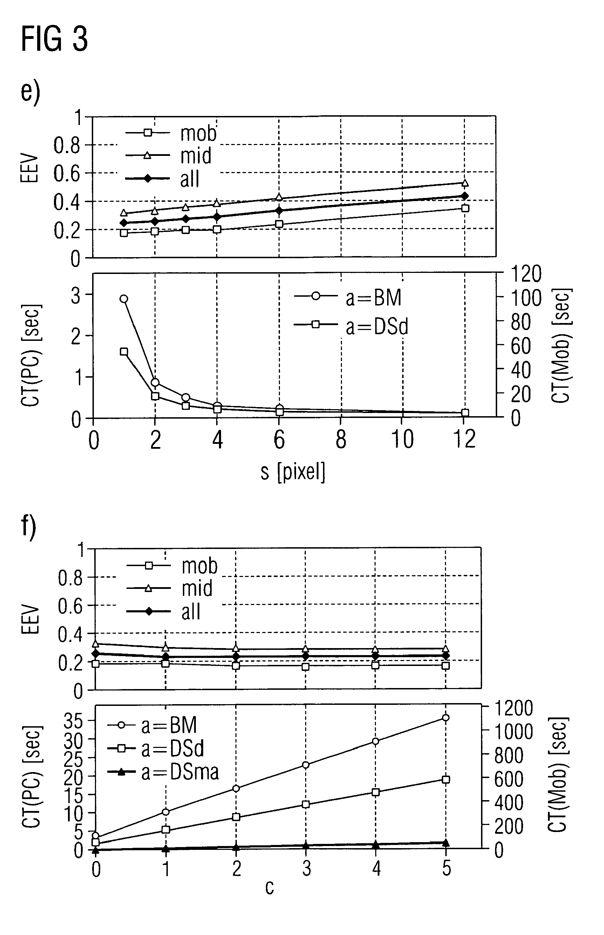

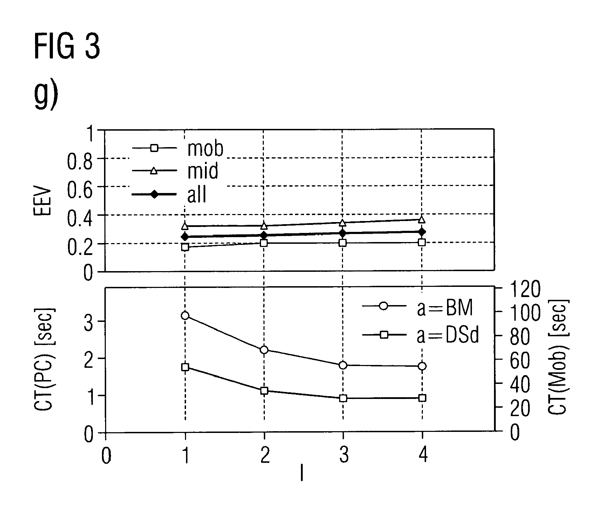

For each parameter a basic state is defined so that the result of the used basic algorithm is regarded as being influenced by an enhancement technique if the corresponding parameter is in its basic state. For the diagrams in Fig. 3a to 3g all parameters (block size k, computing region r, block spacing b, peak ratio p, block sampling period s, luminance correction c, number of logarithmic step l) were kept in their basic states as shown in the table above, except of the regarded one, that was varied through all its possible parameter states. In Fig. 3 different parameter states of each of the parameters k, r, b, p, s, c, l are shown versus an error expectation value EEV, a computing time per frame of a computer (CT(PC)), and a computing time per frame of a mobile device (CT(Mob)). Furthermore, Mob represents an image set of the "mobile" sequences and Mid represents an image set of the "middlebury" sequence. "All" represents both the image sets of the "mobile" and the "middlebury" sequences. In Fig. 3f, besides the peak ratio p, a replacement of unreliable values RUV is illustrated.

The computing times were measured for the sequence Mob4 as the mean value of 10 measurements in the slowest and 10000 measurements in the fastest case.

For all parameters there is a higher error rate for the "middlebury" sequences than for the "mobile" sequences. Hence, there is a higher sensitivity against the geometrical complexity of the contained scene, than against the image quality.

For the parameter "k", there is a global error minimum, so that from here the set K of its possible states is K= {1, 3, 5,..., 25}.

The parameters "s" and "l" are not applied for DSma. For the parameter "p" the number of errors is increased because not reliable values are regarded as an error. With their replacement the error rate then decreases below its initial value.

For some parameters (e.g. "b") there exist states with the computing time for a=BM falling below the computing time for a=DSma indicating that the latter is not always the fastest alternative.

Error Calculation

There are 558840 possible combinations for the states of the scaling parameters shown in table above. Since this high number complicates the full measurement of all related error expectation values, especially with regard to a later insertion of additional parameters, a method is suggested for calculating all values from a reduced set of measurements.

A state combination of the scaling parameters can be written as a state combination vector z:

$$z_i = \left(a{\in}A, k{\in}K, b{\in}B, s{\in}S, l{\in}L, r{\in}R, p{\in}P, c{\in}C\right)^T \tag{31}$$

The combination of basic states (cp. table) is regarded as the unscaled case, so that its state vector $z_0$ is:

$$z_0 = \left(a{=}a_0, k{=}k_0, b{=}b_0, s{=}s_0, l{=}l_0, r{=}r_0, p{=}p_0, c{=}c_0\right)^T$$
$$= \left(BM, 25, 1, 1, 1, 100, 0, 0\right)^T \tag{32}$$

The event "parameter x causes an error" is written as:

$$Q(x) \tag{33}$$

With it the overall probability P for an error with a parameter combination z can be regarded as the "OR" function:

$$P\big(Q(z)\big) =$$
$$P\Big(Q(a){\cup}Q(k){\cup}Q(b){\cup}Q(s){\cup}Q(l){\cup}Q(r){\cup}Q(p){\cup}Q(c)\Big) \tag{34}$$

For independent events, with the simplified notation $P(Q(x))=:P(x)$, equation 34 can be written as:

$$P(z) =$$
$$P(a){\cup}P(k){\cup}P(b){\cup}P(s){\cup}P(l){\cup}P(r){\cup}P(p){\cup}P(c) \tag{35}$$

The independence of the events will be proofed later in this section.
Since the combination of all basic parameter states z0 is regarded as the unscaled case, its error probability is regarded as the error probability of the basic algorithm:

$$P(z_0) = P(a) =: P_0 \tag{36}$$

The error probabilities of all states A are identical, since they represent different implementations of the same functionality only differing with regard to computing time. From equations 36 and 35 for the single error probability of the basic state x0 belonging to a scaling parameter $x{\neq}a$ applies:

$$P(x_0) = 0 \tag{37}$$

The possible states $x_i \in X = \{x_0, x_1, x_2, ...\}$ of a scaling parameter x can be written as a state vector:

$$\mathbf{x} = \left(x_0, x_1, x_2, \ldots\right)^T \qquad (38)$$

The corresponding vector p(x) of the related single parameter error probabilities is:

$$\mathbf{p}(\mathbf{x}) = \left(P(x_0), P(x_1), P(x_2), \ldots\right)^T \qquad (39)$$

In Fig. 3 the combined error probabilities $\hat{p}(x)$ of the scaling parameters x were measured from the test sequences as the related expectation values, with all parameters ≠x remaining in their basic state (cp. equation 37):

$$\hat{\mathbf{p}}(\mathbf{x}) = \left(P_0 \cup P(x_0), P_0 \cup P(x_1), P_0 \cup P(x_2), \ldots\right) \qquad (40)$$

The basic error probability $P_0$ can be read from the element representing its combination with the basic state $x_0$, since with equation 37 applies:

$$P_0 \cup P(x_0) = P_0 \cup 0 = P_0 \qquad (41)$$

With that, for each of its elements $\hat{p}_i$ the combined error probability vector $\hat{p}(x)$ can be converted into the vector p(x) of single parameter error probabilities:

$$\begin{aligned} \hat{p}_i(\mathbf{x}) &= P_0 \cup P(x_i) \\ &= P_0 + P(x_i) - P_0 P(x_i) \end{aligned}$$

$$\Rightarrow P(x_i) = \frac{\hat{p}_i(\mathbf{x}) - P_0}{1 - P_0} = p_i(\mathbf{x}) \qquad (42)$$

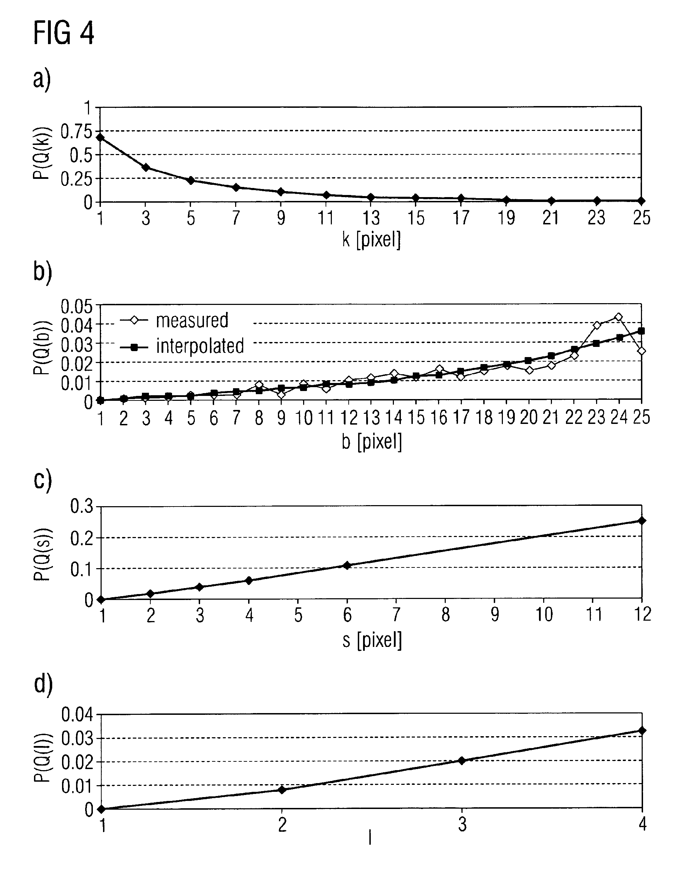

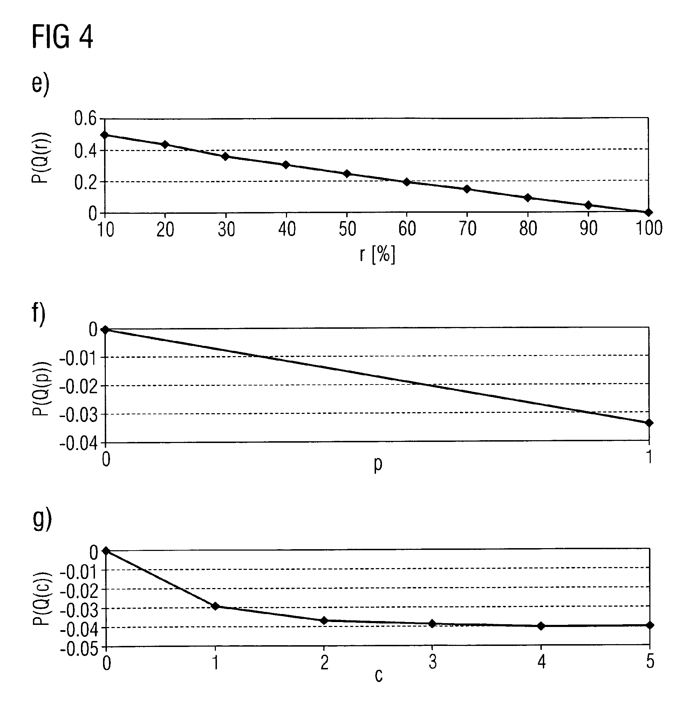

The vectors of the single parameter error probabilities calculated from the combined error probability vectors in Fig. 3 are depicted in Fig. 4a to 4f. It is to be noted that the peak ratio p in Fig. 4f is illustrated with replacement of unreliable values. Scaling parameters can be divided into twc groups: Those reducing the computing time at the expense of quality, and those improving the quality at the expense of speed, such as the parameters "c" and "p". For such error-correcting scaling parameter x the event "x corrected an error" is:

$$R(\mathbf{x}) \qquad (43)$$

With that the overall error probability is:

$$P(z_i) = P\big(Q(g) \cap \overline{R(x)}\big) \tag{44}$$

Again for independent events, with equation 36 applies:

$$P(z_i) = P_0\big(1 - P\big(R(x)\big)\big) \tag{45}$$

For the scaling model it is advantageous to have all parameters connected with the same operation ("OR"), so that the related error probability of the event Q(x) ("x caused an error") is:

$$
\begin{aligned}
P_0 \cap P\big(\overline{R(x)}\big) &= P_0\big(1 - P\big(R(x)\big)\big) \\
= P_0 \cup P(Q(x)) &= P_0 + P(Q(x)) - P_0 P(Q(x))
\end{aligned} \tag{46}
$$

$$\Rightarrow \quad P(Q(x)) = \frac{P_0}{P_0 - 1} P\big(R(x)\big)$$

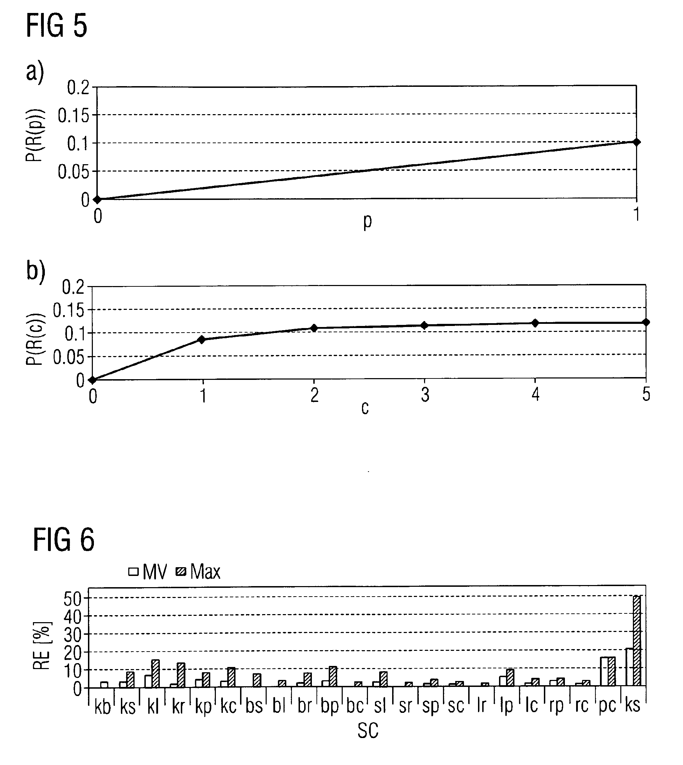

With that the error probabilities of the parameters "p" and "c" that appear negative in Fig. 4 can be transformed into the positive error correction probabilities in Fig. 5a and 5b.

For the proof of independent events, for all parameter tuples $x \in X = \{x_0, x_1, x_2, ...\}$ and $y \in Y = \{y_0, y_1, y_2, ...\}$ the combined error probabilities are calculated:

$$
\begin{aligned}
\hat{\mathbf{P}}_c(x, y) &:= P_0 \cup \mathbf{p}(x) \cup \mathbf{p}^T(y) \\[2mm]
&= P_0 \cup \begin{pmatrix} P(x_0) \\ P(x_1) \\ P(x_2) \\ \vdots \end{pmatrix} \cup \big(P(y_0), P(y_1), P(y_2), \ldots\big) \\[2mm]
&= \begin{bmatrix} P_0 \cup P(x_0) \cup P(y_0) & P_0 \cup P(x_1) \cup P(y_0) & \cdots \\ P_0 \cup P(x_0) \cup P(y_1) & P_0 \cup P(x_1) \cup P(y_1) & \cdots \\ \vdots & \vdots & \ddots \end{bmatrix} \\[2mm]
&= \mathbf{1}\mathbf{p}^T(x) + \mathbf{p}(y)\mathbf{1}^T - \mathbf{p}(x)\mathbf{p}^T(y) + P_0 \\
&\quad - (\mathbf{1}\mathbf{p}^T(x) + \mathbf{p}(y)\mathbf{1}^T - \mathbf{p}(x)\mathbf{p}^T(y))P_0,
\end{aligned} \tag{47}
$$

with $1 = (1,1)^T$.

Additionally, the error expectation values of the same combinations are measured directly:

$$
\hat{P}_m(x,y) :=
\begin{bmatrix}
P(Q(g)\cup & P(Q(g)\cup & \\
Q(x_0)\cup Q(y_0)) & Q(x_1)\cup Q(y_0)) & \cdots \\
& & \\
P(Q(g)\cup & P(Q(g)\cup & \\
Q(x_0)\cup Q(y_1)) & Q(x_1)\cup Q(y_1)) & \cdots \\
& & \\
\vdots & \vdots & \ddots
\end{bmatrix}
\tag{48}
$$

From both distributions the relative error distribution can be calculated:

$$
\mathbf{F}_{rel}(\hat{P}_c(x,y), \hat{P}_m(x,y)) = 100\%\frac{\hat{P}_m(x,y) - \hat{P}_c(x,y)}{\hat{P}_m(x,y)}
\tag{49}
$$

The decoupling of the sampling period "s" from the block size "k" was carried out to make both parameters independent from each other, so that conversely the uncoupled parameters can be assumed to represent not independent events that provide a possibility of comparison. For all possible parameter tuples (x,y) indicated as state combination SC the mean value MV over all elements of $F_{rel}(\hat{P}_c(x, y), \hat{P}_m(x, y))$, as well as its maximum Max is shown in Fig. 6. RE indicates a relative error. From a comparison to the values of the not independent parameters "k" and "s'" here the assumption of independent events is confirmed.

Time Calculation

For an efficiency evaluation of a scaling parameter not only its error probability is needed, but also its computing time. The computing time needed for parameter combination $z_i$ is:

$$
T(z_i)
\tag{50}
$$

Unlike in the error probability case, the computing times of the different basic algorithms are not identical. Since the basic algorithms are completely different implementations of the same functionality they react differently on parameter changes (cp. Fig. 3). Therefore the time vectors for the basic algorithms must be regarded separately and the computing times are distinguished regarding to the used basing algorithm:

$$T\left(a, k, b, s, l, r, p, c\right) =: T^{a \in A}\left(k, b, s, l, r, p, c\right) \tag{51}$$

Similar to equation 36, the computing time of the combination of all basic parameter states is regarded as the computing time of the basic algorithm:

$$
\begin{aligned}
T^{DSma}(z_0) &= T_0^{DSma}, \\
T^{DSd}(z_0) &= T_0^{DSd}, \\
T^{BM}(z_0) &= T_0^{BM}
\end{aligned}
\tag{52}
$$

Assuming a multiplicative relation, between the computing times applies:

$$
\begin{aligned}
T^a(z_i) = \\
T_0^a T^a(k) T^a(b) T^a(s) T^a(l) T^a(r) T^a(p) T^a(c)
\end{aligned}
\tag{53}
$$

For the basic state $x_0$ of a parameter $x \neq a$ with all other parameters in their basic states applies with equation 52, similar to equation 37:

$$T^a(x_0) = 1 \tag{54}$$

The vector of time factors for the possible states x of a scaling parameter x (cp. equation 38) can be constructed similar to equation 39:

$$t^a(x) = \left(T^a(x_0), T^a(x_1), T^a(x_2), \ldots\right)^T \tag{55}$$

In Fig. 3 the combined computing times $\hat{t}^a(x)$ of the scaling parameters x were measured from the test sequences, with all parameters $\neq x$ remaining in their basic state (cp. equation 54) :

$$\hat{t}^a(x) = \left(T_0^a T^a(x_0), T_0^a T^a(x_1), T_0^a T^a(x_2), \ldots\right)^T \tag{56}$$

The basic computing time $T_0^a$ can be read from the element representing its combination with the basic state $x_0$, since with equation 54 applies:

$$T_0^a T^a(x_0) = T_0^a 1 = T_0^a \tag{57}$$

With that, for each of its elements $\hat{t}_i^a(\mathbf{x})$ the vector of combined computation times $\hat{t}^a(x)$ can be converted into the vector $t^a(x)$ of single parameter time factors:

$$
\begin{aligned}
\hat{t}_i^a(\mathbf{x}) &= T_0^a T^a(x_i) \\
\Rightarrow T^a(x_i) &= \frac{\hat{t}^a(\mathbf{x})}{T_0^a} = t_i^a(\mathbf{x})
\end{aligned}
\tag{58}
$$

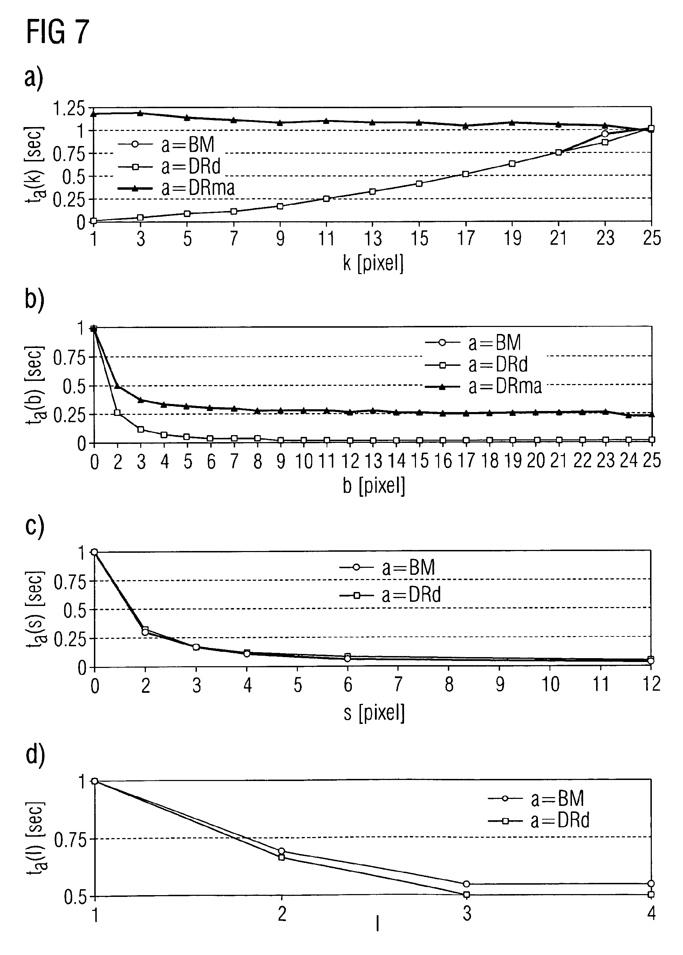

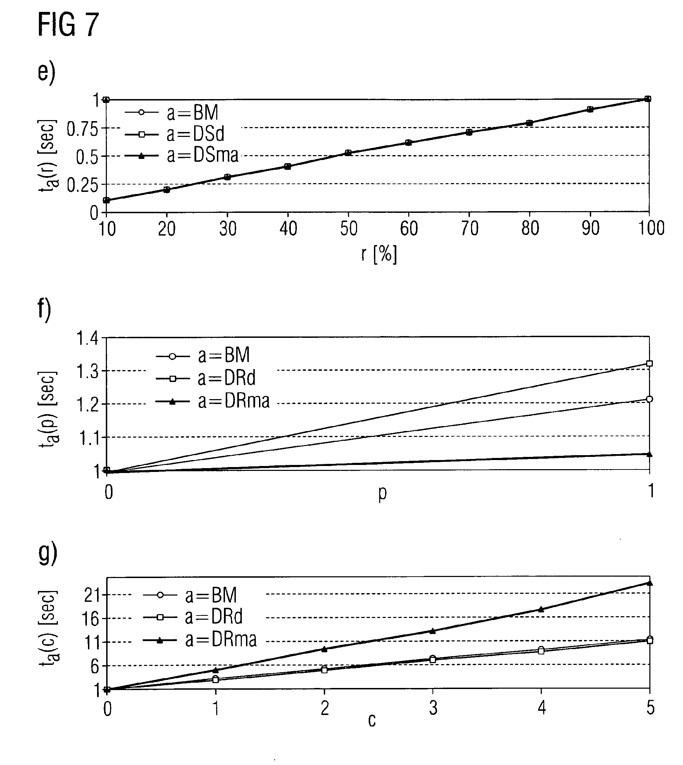

The vectors of the single parameter time factors calculated from the vectors of combined computing times in Fig. 3 are depicted in Fig. 7a to 7g. As a proof for the correctness of the assumption of a multiplicative relation between the computing times for all parameter tuples $x \in X = \{x_0, x_1, x_2, \ldots\}$ and $y \in Y = \{y_0, y_1, y_2, \ldots\}$ the combined computing times are calculated:

$$
\begin{aligned}
\hat{\mathbf{T}}_c^a(x, y) &:= T_0^a \mathbf{t}(x) \mathbf{t}^{aT}(y) \\
&= T_0^a \begin{pmatrix} T^a(x_0) \\ T^a(x_1) \\ T^a(x_2) \\ \vdots \end{pmatrix} \left( T^a(y_0), T^a(y_1), T^a(y_2), \ldots \right) \\
&= \begin{bmatrix} T_0^a T^a(x_0) T^a(y_0) & T_0^a T^a(x_1) T^a(y_0) & \cdots \\ T_0^a T^a(x_0) T^a(y_1) & T_0^a T^a(x_1) T^a(y_1) & \cdots \\ \vdots & \vdots & \end{bmatrix}
\end{aligned}
\tag{59}
$$

For comparison, the computing times of the same parameter combinations are measured directly:

$$
\hat{\mathbf{T}}_m^a(x, y) := \begin{bmatrix} \hat{T}^a(x_0, y_0) & \hat{T}^a(x_1, y_0) & \cdots \\ \hat{T}^a(x_0, y_1) & \hat{T}^a(x_1, y_1) & \cdots \\ \vdots & \vdots & \end{bmatrix}
\tag{60}
$$

From both distributions the relative error distribution can be calculated:

$$\mathbf{F}_{rel}(\hat{\mathbf{T}}_c^a(x,y),\hat{\mathbf{T}}_m^a(x,y)) =$$

$$100\%\frac{\hat{\mathbf{T}}_m^a(x,y) - \hat{\mathbf{T}}_c^a(x,y)}{\hat{\mathbf{T}}_m^a(x,y)} \tag{61}$$

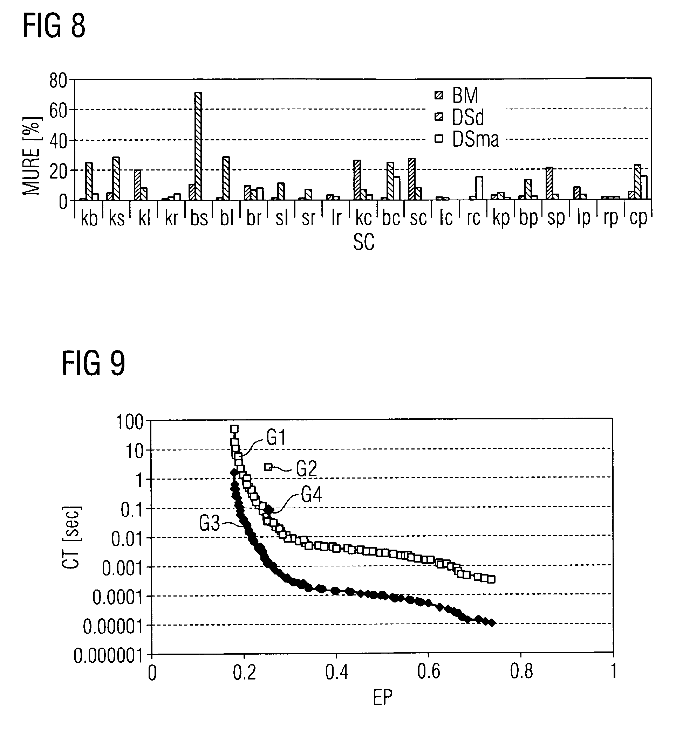

For all possible parameter tuples (x,y) the mean value of relative errors MVRE over all elements of $F_{rel}(T_c(x, y), T_m(x,y))$ is shown in Fig. 8. For those combinations producing the highest errors for the three basic algorithms the calculated computing times $\hat{T}_c(x,y)$ are determined together with the corresponding measured computing times $\hat{T}_m(x, y)$. A similarity of both distributions confirms the assumption of a multiplicative relation between the computing times of the single scaling parameters.

Scaling Model

State Calculation

With the error probability vectors of the single parameters from section "Error calculation" and the relative time vectors from section "Time calculation", in this section the set of computing times and error probabilities for all possible parameter combinations is calculated.

With the tensor product all elements of the relative time vectors $t^g(x)$ can be combined to the vector $w^a$:

$$\mathbf{w}^a = T_0^a\left(\left(\left(\mathbf{t}^a(\mathbf{k}) \otimes \mathbf{t}^a(\mathbf{b})\right) \otimes \mathbf{t}^a(\mathbf{s})\right) \otimes \mathbf{t}^a(\mathbf{l})\right) \otimes \ldots,$$

z.B.:

$$\begin{pmatrix} x_0 \\ x_1 \end{pmatrix} \otimes \begin{pmatrix} y_0 \\ y_1 \end{pmatrix} = \begin{pmatrix} x_0 y_0 \\ x_0 y_1 \\ x_1 y_0 \\ x_1 y_1 \end{pmatrix} \tag{62}$$

With the tensor sum for the connection of two error probability vectors with $A \cup B = A + B - AB$ applies:

$$x \odot y := (x \oplus y) \begin{pmatrix} 1 \\ 1 \end{pmatrix} - x \otimes y \quad,$$

e.g.:

$$\begin{pmatrix} x_0 \\ x_1 \end{pmatrix} \odot \begin{pmatrix} y_0 \\ y_1 \end{pmatrix} = \begin{pmatrix} x_0 + y_0 - x_0 y_0 \\ x_0 + y_1 - x_0 y_1 \\ x_1 + y_0 - x_1 y_0 \\ x_1 + y_1 - x_1 y_1 \end{pmatrix} \tag{63}$$

With that all composed error probabilities can be calculated from the single parameter error probability vectors p(x):

$$\mathbf{n} =$$
$$P_0 \cup \left( p(k) \odot p(b) \odot p(s) \odot p(l) \odot p(r) \odot p(p) \odot p(c) \right) \tag{64}$$

The combination of a vector x and a mxn matrix Y denotes:

$$x \circledast Y := \left[ x \otimes 1_m \middle| 1_{\dim(x)} \otimes Y \right]$$

z.B.:

$$\begin{pmatrix} x_0 \\ x_1 \end{pmatrix} \circledast \begin{bmatrix} y_{00} & y_{01} \\ y_{10} & y_{11} \end{bmatrix}$$

$$= \left[ \begin{pmatrix} x_0 \\ x_1 \end{pmatrix} \otimes \begin{pmatrix} 1 \\ 1 \end{pmatrix} \middle| \begin{pmatrix} 1 \\ 1 \end{pmatrix} \otimes \begin{bmatrix} y_{00} & y_{01} \\ y_{10} & y_{11} \end{bmatrix} \right]$$

$$= \begin{bmatrix} x_0 & y_{00} & y_{01} \\ x_0 & y_{10} & y_{11} \\ x_1 & y_{00} & y_{01} \\ x_1 & y_{10} & y_{11} \end{bmatrix} \tag{65}$$

From that with the parameter vectors x for the matrix N of all parameter combinations results:

$$\mathbf{N} = g \circledast k \circledast b \circledast s \circledast l \circledast r \circledast p c^T \tag{66}$$

So the Matrix M of all parameter state combinations N, the corresponding error probabilities n, and computing

times $W^{a \in \{BM,DSd,DSma\}}$ can be constructed:

$$M = \begin{bmatrix} \mathbf{N} & \begin{matrix} n & w^{BM} \\ n & w^{DSd} \\ n & w^{DSma} \end{matrix} \end{bmatrix}$$

$$= \begin{bmatrix} \vdots & \vdots & \vdots \\ z_{i-1}^T & P(Q(z_{i-1})) & T(z_{i-1}) \\ z_i^T & P(Q(z_i)) & T(z_i) \\ z_{i+1}^T & P(Q(z_{i+1})) & T(z_{i+1}) \\ \vdots & \vdots & \vdots \end{bmatrix} = \begin{bmatrix} \vdots \\ m_{i-1} \\ m_i \\ m_{i+1} \\ \vdots \end{bmatrix} \qquad (67)$$

One line $m_i$ of this matrix represents one parameter combination with the corresponding error probability and computing time.

Optimization

The matrix M with all state combinations, error probabilities, and computing times, can be computed from a full execution of the algorithm for all parameter state combinations, or calculated from a restricted test set. It is processed as follows:

1. All lines $m_i$ of unrealizable parameter combinations are eliminated.

2. All lines $m_i$ are sorted by ascending computing times, so that applies:

$$\mathop{\forall}_{0 \le j < i} j \big( T(z_{i-j}) < T(z_i) \big) \qquad (68)$$

3. All lines with an error probability reached or outperformed by a faster parameter combination are eliminated (so-called Pareto-optimization), so that a line $m_0$ is eliminated if:

$$\mathop{\exists}_{0 \le j < i} j \big( P(Q(z_j)) \le P(Q(z_i)) \big) \qquad (69)$$

With that for every line $m_i$ additionally applies:

$$\mathop{\forall}_{j < i} j \big( P(Q(z_{i-j})) < P(Q(z_i)) \big) \qquad (70)$$

The diagram with all computing times CT and error probabilities EP of the 129 remaining efficient parameter combinations is depicted in Fig. 9. The graph depicted with G1 represents the scaling approach of the invention, thereby being executed on a mobile device. The graph depicted with G2 represents an efficient block-based local error minimization. The graph depicted with G3 represents the scaling approach of the invention being carried out with a computer. G4 represents an efficient block-based local error minimization.

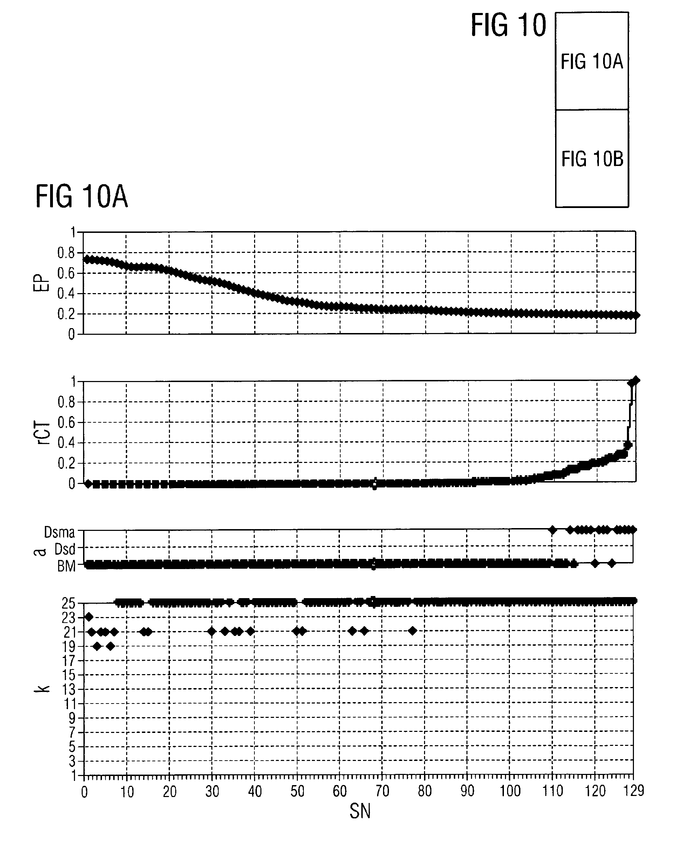

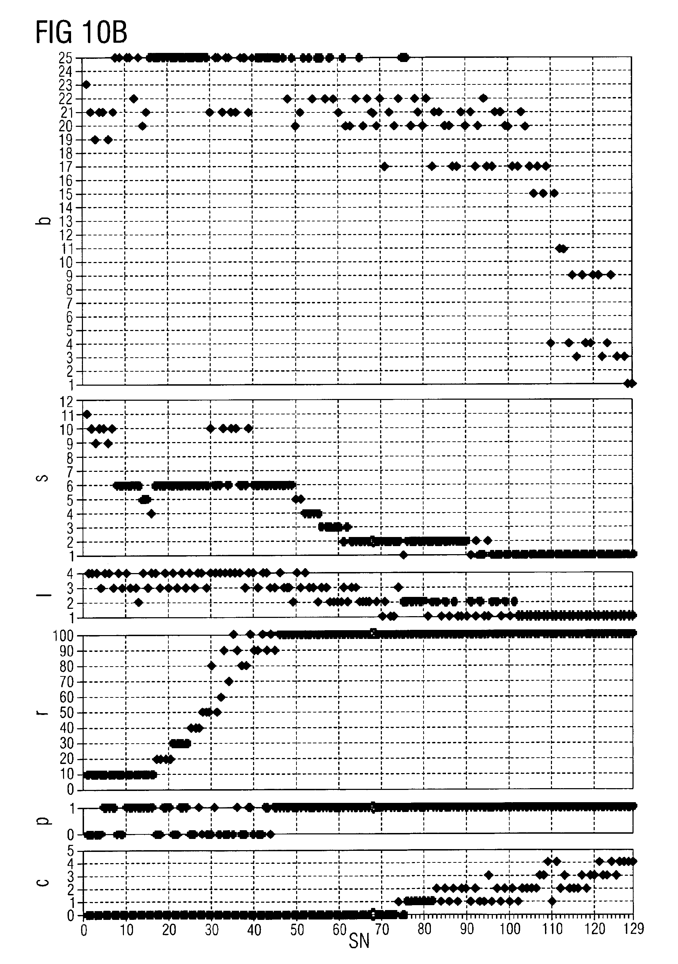

The result quality of the fastest implementation for the block based local error minimization can be achieved in much less time if different speed and quality enhancement methods are combined. Respectively, with the same computing effort a much lower error rate is possible. The parameter states of the 129 efficient combinations (depicted with a state number SN) can be seen in Fig. 10, where a systematic behaviour of the parameters becomes apparent. EP represents the error probability of a respective combination, rCT is the relative computing time. The algorithms based on the disparity space are outperformed by the block matching algorithm combined with the acceleration techniques that are not applicable in combination with the moving average filter.

Computing-Power Adaptation

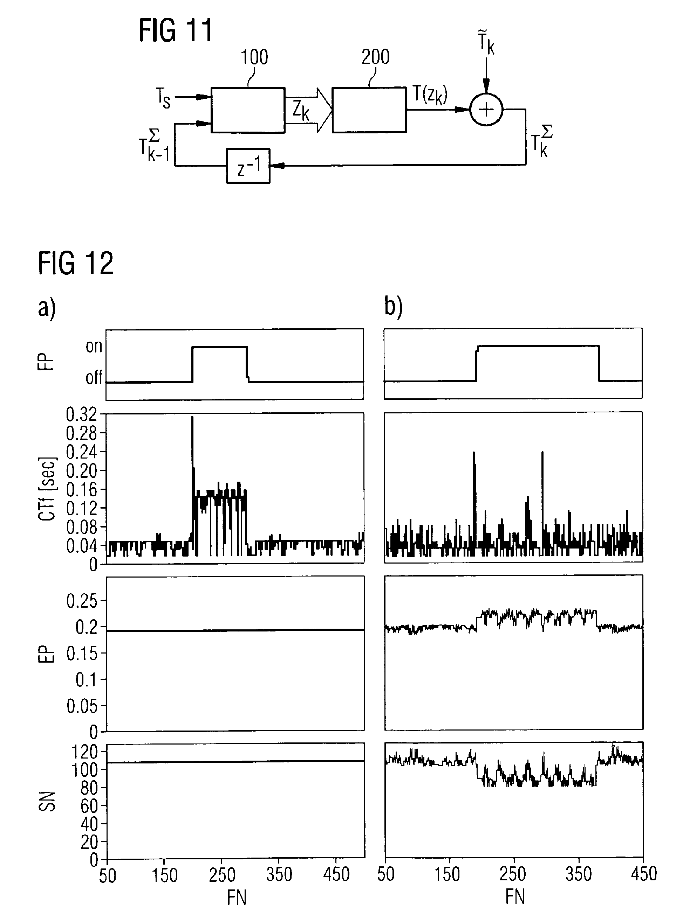

In this section as an example for an application of the scaling model in Fig. 9 and 10 a computing-power adaptive realization of the block based stereo correspondence based on the control loop in Fig. 11 is introduced. Block 100 corresponds to the scaling model. Block 200 represents the underlying algorithm.

With the time measurements $t_{1,k-1}$ at the beginning and $t_{2,k-1}$ at the end of the disparity calculation for a single frame k-1, the computing time $T(Z_{k-1}) = t_{2,k-1} - t_{1,k-1}$ at for the algorithm with the parameter combination $Z_{k-1}$ can be determined for the previous frame. The computing time for all other processes between the calculation of the previous frame k-1 and the current frame k is $\tilde{T}_{k-1} = t_{1,k} - t_{2,k-1}$. Aiming for a frame rate $f_s$, the related overall computing time per frame is $T_s = \dfrac{1}{f_s}$ . With $\tilde{T}_{k-1}$ taken as a prediction of $\tilde{T}_k$, the setpoint for $T(z_k)$ is:

$$T(\mathbf{z_k}) = T_s - \tilde{T}_{k-1} \qquad (71)$$

The state combination vector $v_{k-1}$ used for the computation of the previous frame is $v_i$ in line $m_i$ of the matrix M (equation 67), so that the computing time $T(z_{k-1})$ corresponds with the time $T(z_i)$ in M.

For the retrieval of the new state vector $v_k = v_j$, the line $m_j$ of M must be found minimizing the

$$j = \arg\min_{j'} T(\mathbf{z_k}) - T(\mathbf{z_{j'}}) \frac{T(\mathbf{z_{k-1}})}{T(\mathbf{z_i})} \qquad (72)$$

Fig. 12a shows the computing-time behaviour of a static implementation of the block based stereo correspondence with a fixed parameter state 110 (cp. Fig. 10). FN represents a frame number. During the runtime of a different process FP with higher priority, here an increasing overall computing time (CFf = computing time per frame) violating the real time constraint can be recognized.

With the dynamic implementation in Fig. 12 (right) the time behaviour stays unaffected by the foreign process at the expense of a slightly increased error probability.

The example of the invention provides an approach for making the block based local error minimization scalable, with the objective of an automatic adaption of the algorithm to changing computing power.

Therefore, three different basic implementations are used: the classic block matching algorithm, the direct straightforward implementation of the local error minimization in the disparity space, and a moving average filter based implementation well known for its efficiency from literature.

Those implementations are modified with different speed or quality enhancement techniques, effecting all three implementations differently: The block size is well known for its effect on the result quality of stereo matching and the peak ratio is an additional technique for quality enhancement. Sub-sampling and logarithmic search are well known concepts widely used for acceleration of block based vision algorithms but are usually not used with stereo correspondence. Additionally, the block distance for speed and the luminance correction for quality improvement are used. This collection of techniques makes no claim to be complete, since there is a broad variety of methods additionally applied on the block based local error minimization, especially of those aiming for a quality improvement.

Each of those methods, and with it the time and error behaviour of the whole algorithm, can be controlled by a related parameter with an individual set of possible states. From a statistical error evaluation and the corresponding time measurements all single parameter state combinations of the whole resulting parameter framework are set into relation with each other.

Due to their high amount, their mathematical connection is derived from considering an error as a probabilistic event, enabling the calculation of the results for the full parameter set from a restricted one, also with regard to a later insertion of additional parameters.

On the full set of parameter combinations a Pareto optimization is applied resulting in a set of only 129 efficient state combinations out of originally 558840

From the corresponding time-error-diagram it becomes apparent that the effort of the block based local error minimization can be reduced by a factor of 50 by the use of a well-balanced combination of acceleration techniques on the expense of result quality, and quality improvement methods on the expense of computing effort.

The application of this result can be used as a scaling directive of a real time application which is successfully self-adapting its computing effort for a constant frame rate, while the computing power is dynamically influenced by a foreign process.

**Claims**

1. A method for optimization of computer vision algorithm regarding the resources of a given computing system, comprising the steps of:

   a) providing a computer vision algorithm;
   b) modifying or parametrizing the computer vision algorithm with different combinations of speed and quality enhancement techniques, each of them effecting a different behaviour of the algorithm with regard to an improvement of its speed at the cost of quality or to an improvement of its quality at the cost of speed, thereby controlling each of the enhancement techniques with a parameter having a set of possible states;
   c) determining a subset of parameter state combinations by evaluating or estimating the relationship of quality and speed of all or a defined subspace of possible parameter state combinations, wherein each parameter state combination of the subset comprises a respective parameter for each enhancement technique and wherein each parameter state combination of the subset represents a relation between speed and quality of the algorithm;
   d) using the subset of parameter state combinations as a basis for a scaling directive within a control loop to set or adapt the parameters of the algorithm in dependence of the resources of the given computing system and/or additional constraints.

2. The method according to claim 1, wherein the computer vision algorithm is a stereo correspondence algorithm with block based local error minimization.

3. The method according to claim 1 or 2, wherein a number of different implementations of the computer vision algorithm is modified with the different speed and quality enhancement techniques.

4. The method according to claim 3, wherein the number of implementations is equivalent to each other with respect to their result quality, but not to their computing speed.

5. The method according to claim 3 or 4, wherein the number of implementations of the stereo correspondence algorithm comprises:

   - a directly implemented error minimization in a disparity space,
   - a moving average filter based implementation,
   - a block matching algorithm.

6. The method according to claim 1, wherein the step of adapting the computing time of the algorithm comprises the steps of

   d1) determining the computing time of the algorithm for a previous single frame with its last parameter state combination;

d2) determining the computing time of all other processes running on the computing system during the computation of the previous frame;

d3) determining a predicted computing time of the algorithm for the current frame from the computing times of steps d1) and d2); and

d4) retrieving a parameter state combination of the subset of parameter state combinations according to the predicted computing time of step d3) for adapting the computing time of the algorithm.

7.  The method according to claim 6, wherein the step of retrieving a parameter state combination of the subset of parameter state combinations is carried out such that the quality of the algorithm is optimized with regard to the determined predicted computing time.

8.  The method according to claim 6 or 7, wherein the predicted computing time or the estimated computing time associated with a parameter state combination is adjusted with a correction factor.

9.  The method according to claim 1, wherein the step of determining a subset of parameter state combinations comprises for all or a representative set of possible combinations of selected parameters the steps of:

c1) conducting tests using test data selected for a certain application domain;

c2) recording a resulting joint set of accuracy and computational requirements of the computing system for receiving a statistical information about quality and computing speed;

c3) eliminating all inefficient parameter state combinations of parameters by an optimization algorithm, especially a Pareto-optimization;

c4) storing the resulting parameter state combinations as the subset of parameter state combinations.

10. The method according to claim 1, wherein the parameters of the enhancement techniques are deemed to be statistically independent from each other and where the step of determining a subset of parameter state combinations is partially conducted by estimating the information about quality and computing speed.

11. The method according to claim 1, wherein it is conducted in real time.

12. A system for optimization of a computer vision algorithm regarding the resources of a given computing system, comprising:

a) a first means for modifying or parametrizing the computer vision algorithm with different speed and quality enhancement techniques, each of them effecting a different behaviour of the algorithm with regard to an improvement of its speed at the cost of quality or to an improvement of its quality at the cost of speed, thereby controlling each of the enhancement techniques with a parameter having a set of possible states;

b) a second means for determining a subset of parameter state combinations by evaluating or estimating the relationship of quality and speed of all possible or a defined subspace of parameter state combinations, wherein each parameter state combination of the subset comprises a respective parameter for each enhancement technique and wherein each parameter state combination of the subset represents a relation between speed and quality of the algorithm;

c) a third means for using the subset of parameter state combinations as a basis for a scaling directive within a control loop to set or adapt the parameters of the algorithm in dependence of the resources of the given computing system and/or additional constraints.

# FIG 1

# FIG 2

SI GT RI SI GT RI

Mid1 (426 x 370)  Mob1 (352 x 288)

Mid2 (412 x 370)  Mob2 (352 x 288)

Mid3 (416 x 370)  Mob3 (352 x 288)

Mid4 (416 x 370)  Mob4 (384 x 288)

Mid5 (450 x 370)  Mob5 (352 x 288)

Mid6 (432 x 370)  Mob6 (352 x 288)

Mid7 (425 x 370)  Mob7 (384 x 288)

Mid8 (450 x 370)  Mob8 (352 x 288)

Mid9 (384 x 288)  Mob9 (352 x 288)

Mid10 (434 x 383)  Mob10 (352 x 288)

# FIG 3

## a)

## b)

# FIG 3

c)

d)

# FIG 3

e)

f)

FIG 3

g)

# FIG 4

a)

b)

c)

d)

FIG 4

# FIG 5

a)

b)

# FIG 6

## FIG 7

a)

b)

c)

d)

## FIG 7

e)

f)

g)

FIG 8

FIG 9

FIG 10

| |
|---|
| FIG 10A |
| FIG 10B |

# FIG 10A

FIG 10B

## FIG 11

## FIG 12

a)    b)